# EUROPEAN PATENT SPECIFICATION

(11) **EP 2 026 919 B1**
(45) Date of publication and mention of the grant of the patent: **19.01.2011**
(21) Application number: 07733737.6
(22) Date of filing: 05.06.2007
(51) Int. Cl.: B21C 37/12, F16L 9/147, F28F 1/08

(54) **TUBULAR MEMBERS AND METHODS OF FORMING SAME**
RÖHRENFÖRMIGE GLIEDER UND HERSTELLUNGSVERFAHREN DAFÜR
ÉLÉMENT TUBULAIRES ET PROCÉDÉS POUR LEUR FORMATION

(30) Priority: 05.06.2006 GB 0611058
(43) Date of publication of application: 25.02.2009
(73) Proprietor: ITI Scotland Limited, Glasgow G2 5SG (GB)
(72) Inventor: BOOTH, John Peter, Yorkshire HD9 7JY (GB)
(74) Representative: Bingham, Ian Mark
(86) International application number: PCT/GB2007/050316
(87) International publication number: WO 2007/141573

(56) References cited:
- DE-C2- 2 660 703
- FR-A- 747 210
- JP-A- 2 134 483

## Description

The present invention relates to tubular members and methods of forming the same and relates particularly, but not exclusively to tubular members of the type comprising a spirally wound casing of the self overlapping kind. Whilst the present invention is particularly suited to use in the manufacture of tubular pipes for conveying fluids, it will be appreciated that the present invention may be employed in the manufacture of other tubular members such as, for example, reactor vessels, treatment chambers and furnaces, to name but a few.

It is well known to manufacture tubular members by spirally winding a strip of material in self-overlapping manner such as to form a tube or the like and to bond or otherwise join sections of the strip to each other such as to form an integral structure capable of retaining its formed shape. Once example of such as structure is disclosed in the present applicant's own earlier published application W02006/016190 which discloses a tubular body comprising an outer casing formed from relatively flat self overlapping spirally wound metal strip wherein each layer is interlocked with its immediate layer so as to form a strong and relatively rigid structure which may be used for transporting fluids such as oil, gas and the like. In one arrangement the strip is formed from a flat strip having a lateral displacement or "joggle" provided therein and extending along a longitudinal axis of said strip such as to divide the strip into two portions and allow one edge of a subsequently deposited layer to lie within a region formed by the joggle. Such an arrangement provides a multi layer flat structure having a high degree of strength and rigidity and is able to operate at elevated pressures whilst maintaining its structural integrity. Unfortunately, such a structure is not very flexible as the interlocking arrangement is designed for strength and rigidity. A second embodiment discloses an alternative form of casing in which a series of strengthening ribs are formed along the length of the strip and act to stiffen the final product by virtue of their inherent rigidity and their inter-engagement with corresponding features on a lower surface. Again, this structure is inherently stiff and able to operate at elevated pressures but is not inherently flexible.

A flexible corrugated tubular member is disclosed in EP1,112,787, which describes a gas tight tube formed from a spirally wound corrugated strip having flat edges which are first overlapped and then welded to immediately adjacent portions of said strip so as to retain the strip in place. The corrugations give the strip a sinusoidal cross-sectional profile and introduce a degree of flexibility not available in W02006/016190, mentioned above. Whilst the sinusoidal nature of the corrugations provide a degree of flexibility it is difficult to weld along the corrugations and, hence, the flat portion is necessary in order to facilitate joining of the strip to form the finished product. It will be appreciated that the flat portions must be overlapped and then welded to each other along their entire length on order to make a gas tight seal and this can be a very time consuming and expensive operation to perform. Additionally, the fact that the flat portions,must be overlapped before they can be welded means that the final product has different thicknesses at different portions thereof. Still further the flexibility will vary along the structure as the flat portions are inherently rigid whilst the corrugations are inherently flexible.

A still further flexible member is disclosed in US 3,538,728, which describes a flexible corrugated tube formed from strip material having a generally sinusoidal corrugated cross-sectional profile. The edges of the strip are joined to each other by providing a length of non corrugated strip adjacent the edges thereof and roll forming said edges over each other in order to provide a mechanically strong joint. Whilst this arrangement provides a perfectly acceptable final product it does suffer from the fact that the roll-forming of the edges creates an area of rigidity in what is otherwise intended to be a flexible structure. Additionally, due to the vary nature of the manufacturing process, it would be difficult, if not impossible, to produce a multi-layer structure in which further strengthening layers are wound over previously deposited layers. In reality, this structure is not self-overlapping. JP 02134483 describes a spiral corrugated pipe of rigid PVC, where adjacent sections are bonded together to form a continuous pipe by a flexible resin material, having affinity for the PVC material. The aim is to achieve strong bonds whilst also avoiding adhering the pipe to the mandrel on which it is formed.

It is an object of the present invention to provide a tubular member which addresses the problems associated with the above-mentioned arrangements and which may be produced by a continuous or semi-continuous process. It is a further object of the present invention to provide a tubular member that facilitates the evacuation of any gas that has permeated through the inner liner.

Accordingly, the present invention provides a tubular member comprising a casing having one or more strips of self overlapping helically wound material having a first edge and a second edge, wherein said strip has a corrugated cross-sectional profile with radially adjacent curves sharing the same origin of bend radius O and includes a longitudinally extending step portion between said first edge and said second edge at which the strip is displaced out of the profile of the corrugation thereby to form a depression and in which adjacent first leading edge and second trailing edge lie within said depression formed by said step portion.

The sinusoidal nature of the corrugation with radially adjacent curves sharing the same origin of bend radius O has a number of advantages. Firstly, the flexibility of the structure is enhanced as bending takes place around the same point (O). Secondly, the provision of a common bend radii allows for the sliding of adjacent surfaces of the inner and outer corrugations relative to each other. Thirdly, when this feature is combined with the joggle 18, the leading and trailing edges of the strip are easily able to nestle on top of one an other, which is not the case in the prior art. Indeed, this last feature also creates an inner and outer surface that whilst corrugated is devoid of sharp edges that can present obstacles to other articles such as coatings placed thereon or materials passed through said member.

The step may be provided on the side of the corrugation or on the base thereof and the member may include a flat portion between corrugations on which the step may be located.

In one arrangement the leading and trailing edges terminate short of said step, thereby to form a gap therebetween whilst in another arrangement the leading and trailing edges terminate immediately adjacent said step.

Advantageously, the member includes an inner cylindrical member formed of, for example, plastic within said casing. Such a member may also be flexible and may be used as a former onto which the corrugated portion is formed or may be inserted into said corrugated portion after it has been formed.

In a preferred arrangement the member includes an insert between the corrugations and said insert may comprise a gas vent. Such a vent may comprise a gas permeable material having a longitudinally extending passageway extending therealong or may comprise a groove in an outer surface of said insert or may comprise a passageway formed within the insert itself. When provided, the insert may have a profile matching said casing and said inner cylindrical member and it may be adhesively bonded to the inner cylindrical member by, for example, a gas permeable adhesive. In some arrangements the insert may be an instrumentation device, a heating / cooling element or a telecommunications device.

The tubular member may be provided with an outer coating comprising, for example, a plastics material, such as polyethylene or the like which helps protect the member from the surrounding environment.

Preferably, the corrugations have a height H and a width W and in which each corrugation has a height to width ratio of between 4:1 and 1:1.

Preferably, the corrugations have a bend radii of greater than three times the thickness T.

Advantage may be gained from having one or more of a number of materials between the strips. For example, one may provide a low friction material such as PTFE or nylon such as to assist the strips slide over each other or one may provide an elastomeric material such as rubber or the like so as to accommodate a higher degree of bending through elastic deformation.

It will be appreciated that the present invention may take a number of different forms such as, for example, straight tubular structures or tapered tubular structures.

Each of the above-mentioned arrangements may employ a perforated strip at the apex of the corrugations, thereby to assist with gas discharge.

According to a further aspect of the present invention there is provided a method of manufacturing a tubular member comprising: forming a flat strip having a first leading edge and a second trailing edge and a corrugated cross-sectional profile with adjacent curves of said corrugated profile having different radii of curvature and sharing the same origin of bend radius O and a longitudinally extending step portion between said first edge and said second edge at which the strip is displaced out of the profile of the corrugation; winding said strip in a self overlapping manner to form a tubular structure by overlaying the first edge of said strip over the second edge of a previously deposited portion of said strip such that the first edge is deposited into a depression formed by said step and the corrugation of greater radius of curvature is lain over a corresponding radially inner corrugation of lesser radius of curvature; and continuing to wind further convolutions in self overlapping manner until said tubular member is completed.

Advantageously, the method may include the step of winding said strip onto an inner cylindrical member. Alternatively the method may include the step of inserting an inner cylindrical member into said tubular member after said tubular member is formed.

The method may further include the step of positioning an insert into a region formed between said corrugated tubular member and said inner cylindrical member. Said insert may be provided in the form of a gas vent comprising a gas permeable material having one or more longitudinally extending passageways extending therealong. Alternatively the method may include the step of inserting said insert in the form of an instrumentation device or a heating element, any of which may then be adhesively bonded to said inner cylindrical member by, for example, a gas permeable adhesive.

The method may include the step of applying an outer protective coating over said tubular member. Said protective layer is applied in the form of a plastics material such as polyethylene.

The method may include the strep of applying an adhesive between the strips. Alternatively, the method may include the step of applying a low friction material or a deformable material between said strips.

The method may include the step of forming the structure as a tapered structure.

Advantageously, the method may include the step of inserting a perforated strip at the apex of the corrugations.

Conveniently, the method may include the step of melting an inner cylindrical member such as to allow it to flow into any void space within the corrugation.

The present invention will now be more particularly described by way of example only with reference to the accompanying drawings, in which:
Figure 1, is a cross-sectional view of a portion of a tubular member according to one aspect of the present invention;
Figure 2, is a cross-sectional view of a portion of the tubular member shown in figure 1 and illustrates in more detail how the contoured corrugations fit within each other;
Figure 3, a cross-sectional view of a tubular member according to the invention and illustrates how the corrugations deform and move relative to each other when the member is subjected to bending;
Figure 4, is a cross-sectional view of a portion of the tubular member according to another aspect of the present invention and illustrates the location of an instrumentation line or other device within the gap formed between an outer casing and an inner core;
Figure 5, is a cross-sectional view of an alternative form of tubular member in which a relatively short section of flat portion is provided between corrugations and this portion is used to accommodate an overlapping portion or "joggle";
Figure 6, is a cross-sectional view of an end fitting suitable for the above-mentioned tubular member and further illustrates an arrangement for facilitating the extraction of gas or other fluid that might accumulate within any gap between the outer casing and the inner core; and
Figure 7, illustrates an alternative form of gas vent.

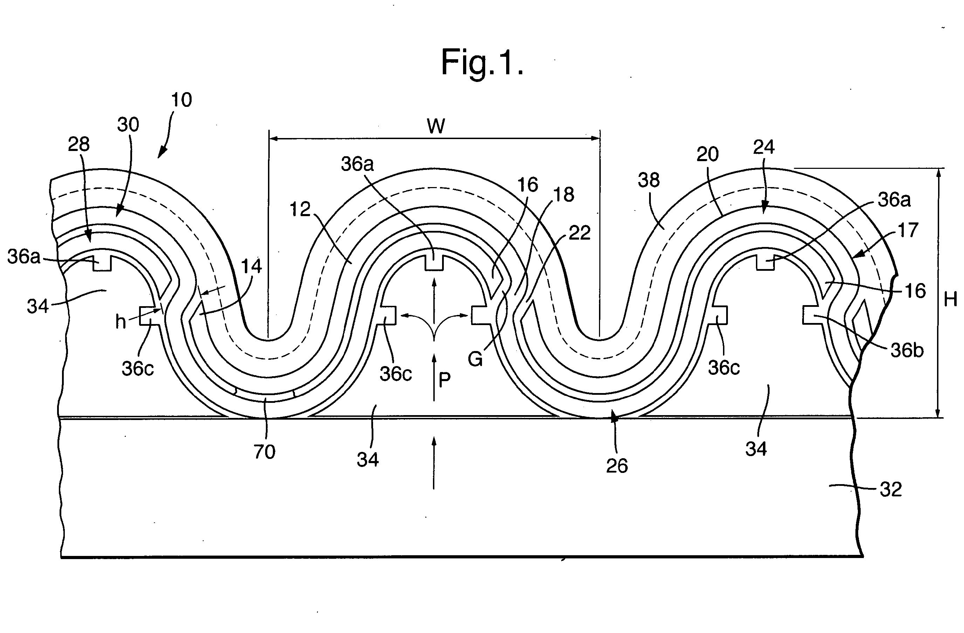

Referring now to the drawings in general but particularly to figure 1, it will be appreciated that a tubular member 10, such as a pipe, may be formed by wrapping one or more strips 12 of material, such as metal, in a self overlapping helically wound manner such that a first or "leading" edge 14 overlaps a second or "trailing" edge 16 of a previously deposited strip and a double layer structure 17 is formed. The present invention provides a strip 12 having a corrugated cross-sectional profile (as shown) and further includes a longitudinally extending step 18 portion between the first and the second edge and which extends along the strip in parallel to said edges 16,18. The step 18 is formed during a prior rolling process used to form the corrugations 20 and effectively displaces the strip out of the profile of the immediately adjacent corrugation, thereby to form a depression 22 the function of which will be described in detail shortly. The corrugations introduce a degree of flexibility into the pipe as the corrugations facilitate flexing of the pipe whenever it is subjected to a bending motion. Such can not be said of pipes formed with generally flat cross-sectional profiles or pipes formed with a combination of corrugations and flat sections, as such structures are comparatively rigid and bending thereof requires buckling of a tubular structure, which is comparatively difficult to do, and often results in failure of the structure itself. The aspect ratio (height/width) of any corrugations may be selected to provide a desired combination of flexibility and rigidity. As shown, the structure has an aspect ration of 1/1 which provides equal degrees of rigidity and flexibility. Should more flexibility be required one can increase the height H whilst retaining the same width W and, thereby, create a tall and slender corrugation (not shown), the sides of which are more slender and, therefore, able to flex than the top or bottom portions 24, 26 which are comparatively rigid. Alternatively, one could alter the aspect ration by increasing the width W and reducing the height H, thereby to form a generally flat cross-sectional profile more akin to a flat walled tube with all the inherent strength properties that has. Between these two extremes lie various degrees of rigidity and flexibility that the designer can call upon as and when necessary in order to meet specific functional demands that the final product may be required to meet.

From figure 1 it will be appreciated that the "joggle" or step preferably has sufficient height h to accommodate an adjacent edge 14, 16 within the depression 22 such that the combined corrugation has a generally smooth inner and outer profile save for any minor gap G between any edges 14, 16 and the step 18 itself. Alternative forms may be employed but will not benefit from the advantages that a generally smooth surface might bring. For ease of forming, it has been found that the joggle is best placed at a side of the corrugation towards the trailing edge 16 as this allows any subsequently deposited layer to flow smoothly into the recess formed by a previously deposited strip portion. Other alternatives are possible, and it may be convenient to provide the joggle 22 at the base or the top of any corrugation. The gap G is optional but, when provided, allows for a degree of tolerance when laying down the strip and also allows for a degree of sliding to take place between inner and outer layers 28, 30, as will be described later herein. Also shown in figure 1 is an inner cylindrical member 32 which may be formed of a plastics material or of a metal. If member 32 is plastic it may be extruded or otherwise formed in any one of a number of ways well known to those skilled in the art. If the member 32 is metal it may be roll formed and seam welded or otherwise formed. In one arrangement of the present invention the function of the inner cylindrical member is to form a corrosion proof barrier between the fluid being carried and the corrugated casing which is, preferably, formed form a metal material so as to be resistant to any pressure loading the inner core might experience. In this arrangement the inner cylindrical member is preferably formed of a plastics material. Whilst plastics materials are generally very able to resist corrosion they can be permeable and may allow for gas to pass therethrough. Gas permeates the PE polymer inner membrane liner when the pipe is subjected to internal pressure. This gas eventually collects under pressure at the interface of the PE liners outer surface and the inner surface of the steel strip. When a sudden pressure reduction occurs in the inner pipe line this pressurized gas collected at the interface can't permeate back into the inner pipe quickly enough and causes the liner to collapse inward. The interface gas must be vented to the atmosphere or collector vessel.This is a particular problem when such materials are used to convey gas at high pressure as the gas is, in effect, driven across the wall of the cylindrical member and can enter the outer casing area where it must be disposed of safely if safety issues are to be avoided. One advantage of the present invention resides in the ability to employ the void V formed between the inner cylindrical member 32 and the corrugated outer casing as a gas escape route, thus facilitating the evacuation of possibly extremely dangerous gasses along the helical inner spiral to a point at the end of the pipe where it can be handled appropriately. A particularly useful addition to the above arrangement is insert 34 which performs two functions. Firstly, insert 34 acts to space fill the void between the inner core 32 and the outer casing and thereby assist with the transmission of load to the stronger outer casing and, secondly, it acts to provide a gas escape passage 36. This passage may take any one of a number of forms but it has been found that a simple groove or series of grooves 36a to 36b provided on an outer surface of the insert perform the task well whilst being simple to form. Preferably the insert is formed from a gas permeable plastic such as Polyethelene so as to create a gas path P and is bonded to the inner cylindrical member 32. The adhesive should be applied to only portions of the insert so as to ensure a gas path is maintained between the inner cylindrical member 32 and grooves 36. Alternatively, a gas permeable adhesive such as, for example, an epoxy adhesive such as Araldite ^{™}, may be employed. An outer cover 38 may be provided in the form of a further flexible plastics material which acts to protect the casing form any external environment. Such a cover may be applied by a crosshead extruder or the like but may be applied as a strip of plastic spirally wrapped around the casing. Alternatively, it may comprise a shrink wrap coating such as are well known in the art and therefore not described further herein.

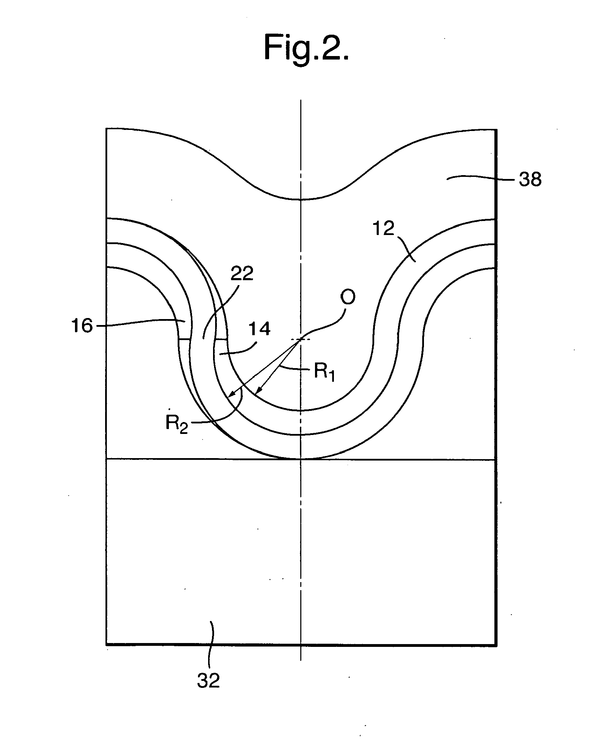

Figure 2 illustrates in detail an alternative form of the casing structure in which the lateral displacement or joggle 22 is formed as a gentle transmission from one side to the other and the edges 14, 16 of strip are profiled so as to fit closely to the profile of the joggle by chamfering the edges thereof such that they taper on the side confronting the joggle. Also shown in figure 2 are radii lines R¹ and R² which indicate the radii of curvature of the corrugations and which should be selected so as to avoid over stretching any metal during the forming of the corrugations. In practice this means that, for most metals, the radius of curvature R will depend upon the material itself and the more ductile the material the tighter the bend radius. For Martinsite it is appropriate to use a bend radii of 3t (where t is the thickness of the material). Figure 2 also illustrates the nature of the corrugation with radially adjacent curves sharing the same origin of bend radius O. This feature has a number of advantages. Firstly, the flexibility of the structure is enhanced as bending takes place around the same point (O). Secondly, the provision of a common bend radii allows for the sliding of adjacent surfaces of the inner and outer corrugations relative to each other. Thirdly, when this feature is combined with the joggle 18, the leading and trailing edges of the strip are easily able to nestle on top of one an other, which is not the case in the prior art. Indeed, this last feature also creates an inner and outer surface that whilst corrugated is devoid of sharp edges that can present obstacles to other articles such as coatings placed thereon or materials passed through said member. The degree of flexibility is further enhanced if the corrugations are formed as a sinusoidally extending series of corrugations as shown in figures 1 or 2, for example. It will be appreciated that these feature may be employed throughout the drawings of the present application but, for purposes of clarity, the bend radii are omitted in other drawings.

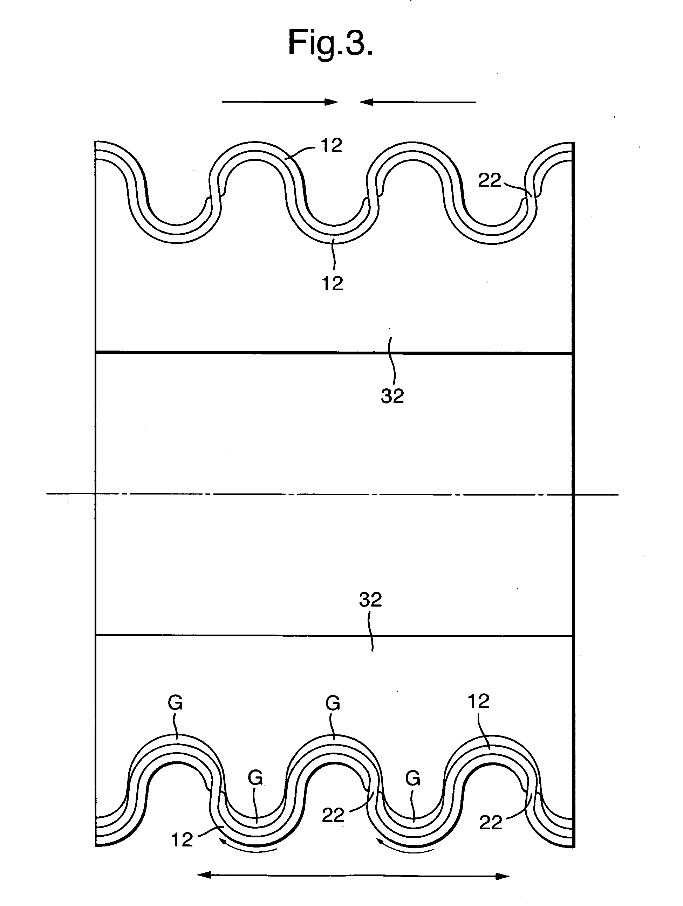

Figure 3 illustrates the results of bending the pipe about its longitudinal axis X-X and from which it will be appreciated that the lower side will be stretched whilst the upper side will be compressed. As the corrugations stretch the corrugations open up as shown and portions thereof may slide over each other either opening or closing gap G as appropriate.

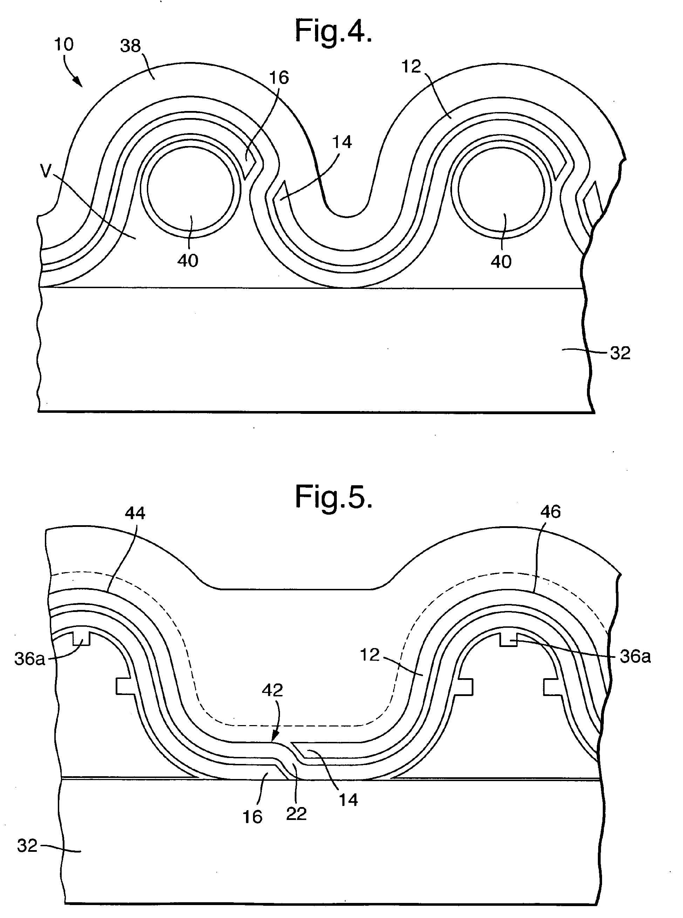

Figure 4 illustrates an alternative arrangement in which the void space is employed to accommodate an additional component such as, for example an instrumentation probe or a heating element, shown generally at 40. Other components such as communication lines, cooling lines may also be routed along the spiral void formed by the corrugation.

Figure 5 illustrates a further arrangement in which a flat portion 42 is provided between corrugated portions 44, 46 and the step 18 is provided within the flat portion itself. Whilst the generally flat portion adds a degree of rigidity to the final product it still retains a good degree of flexibility whilst also being somewhat simpler to form. Additionally, the pressure capabilities of such an arrangement are greatly enhanced, as are the axial load carrying capabilities.

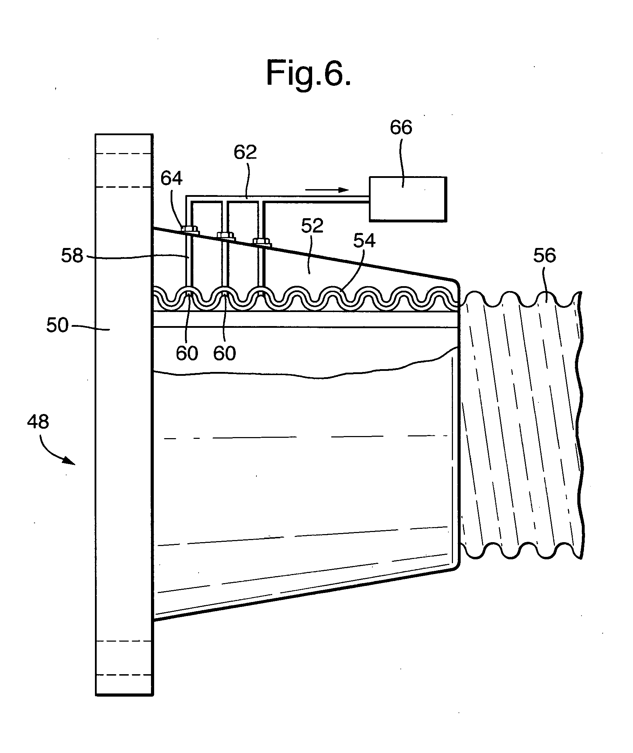

Figure 6 illustrates an end fitting 48 comprising a flange end 50 for connecting to an adjacent pipe flange and a joining portion 52 having a spiral grove 54 provided therein which corresponds to the helical profile 56 on the outside of the pipe and in which the pipe is engaged so as to secure it to the end fitting 48. Also shown in figure 6 is a gas evacuation system comprising a series of holes 58 drilled through the jointing portion 52 which connect with corresponding holes 60 provided through the outer casing 17 of the pipe itself and which enter the void portions within the corrugations. When fitted with a gas evacuation insert 34, any gas which has accumulated within the void space exits therefrom via holes 58 and 60 before entering exit tubes 62 secured to the jointing portion 52 by pipe fittings 64. In practice, the pipe may be inserted into the jointing portion 52 before holes 60 are drilled into the pipe corrugations, thereby to ensure accurate alignment of the exit path. Should it be necessary, one may also provide a gas evacuation system shown schematically at 66, thereby to enhance the gas extraction. These holes 58, 60 may also be used to access any other components such as instrumentation lines that have been placed within the voids or to allow access to the cooling or heating elements routed therethrough.

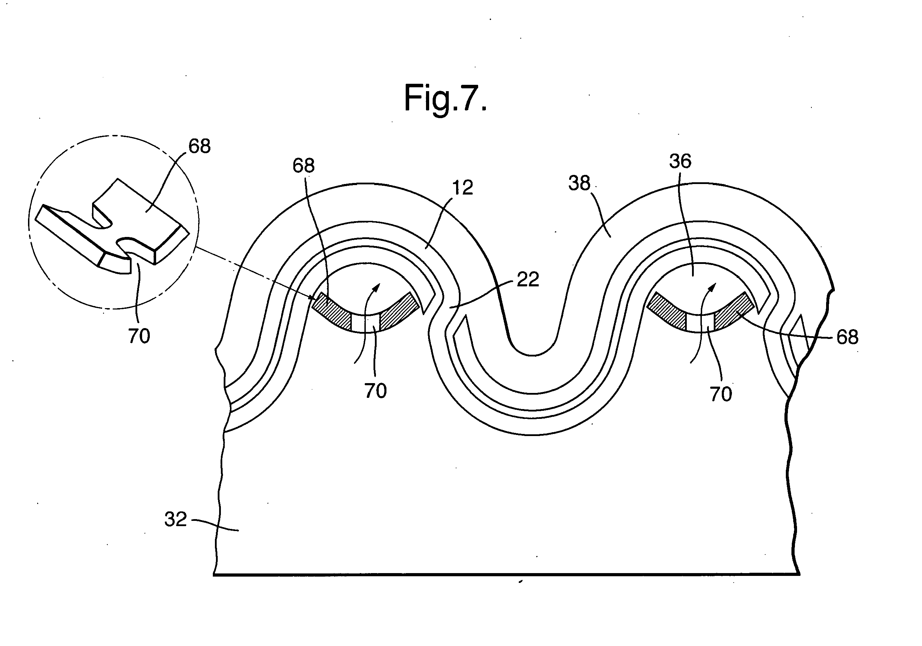

Figure 7 illustrates an alternative form of gas venting system in which a slotted or perforated strip 68 is provided along the upper portion of the void space as the strip 12 is wound onto an inner member 32 which, effectively, acts as a former. Once the tubular member 10 is fully wound onto the former the casing is heated such as to cause the plastic inner member to become malleable and flow into any remaining void space. This arrangement facilitates good adhesion of the inner member 32 to the corrugated strips whilst providing an excellent direct gas path to vent holes 70 within strip 68.

The reader's attention is now drawn to the possibility of employing various different materials for the inner member 32 and the outer casing 17. Whilst the outer casing and the inner member 32 may be made form a number of different materials it has been fount that a further advantage can be gained if the yield strengths of the inner member 32 and the outer casing 17 are selected such that the former is less than that of the latter. When such is the case the inner core will yield before the outer casing does and this is of particular advantage if one wishes to transport the finished product by winding it onto a transport drum (not shown). If the material properties and dimensions are selected such that the inner core is subjected to a small amount of plastic deformation as it is would onto the transport drum then the inner core will preferentially adopt the diameter of the drum when the winding load is relaxed. This is in contrast with an outer casing 17 which, when the material properties and dimensions are suitably selected, will remain within its elastic limit and wish to return to its naturally straight state. It is possible to match the degree of plastic deformation of the inner core such that the forces created by the inner core at least partially match those of the outer casing and, therefore, compensate for any tendency the outer casing 17 might have to uncoil itself after winding onto the transport drum. This will reduce the requirement for strong retaining straps and will make handling and unwinding significantly safer. It will be appreciated that the yield strength is the amount of strain the portion experiences before it yields and enters the zone of plastic deformation and that, consequently, both the material properties and the dimensions of each component must be taken into account when designing a pipe to operate in the manner described above. Should the tubular member 10 be provided with an outer cover 38 then the material properties and dimensions of this should also be taken into consideration when determining the coiling properties. For example, should one employ a plastics material then this will behave in the same was as the above-described inner member 32 and the plastic deformation thereof should be added to that of the inner core 32.

Whilst the forming of a tubular member as described above has been mentioned briefly earlier herein, it is worth recapping and reminding the reader that the one first forms a flat strip having a cross-sectional profile and a longitudinally extending step portion between a first edge and a second edge at which the strip is displaced out of the profile of the corrugation before winding said strip in a self overlapping manner to form a tubular structure by overlaying the first edge of said strip over the second edge of a previously deposited portion such that the first edge is deposited into a depression formed by said step and continuing to wind further convolutions in self overlapping manner until said tubular member is completed. The winding process itself may be performed by winding onto a cylindrical mandrel which may be the inner core 32. Alternatively, the inner core may, under some circumstances, be inserted after the tubular member has been formed. During the winding process and possibly thereafter one may position the insert 34 within the void formed between any inner core and the inner surface of the casing itself. The insert may take any one of a number of forms such as are described above and are, therefore, not described further herein. A further step of bonding the insert 34 to the inner core 32 (or indeed the casing) may be adopted and, if so adopted, one may apply a gas permeable adhesive to the contacting surfaces of the insert and the inner core. Whenever appropriate, a further outer coating in the form of, for example, a plastics material such as polyethylene is added over the corrugated portions so as to protect said pipe form the environment in which it is to be placed.

It will be appreciated that, whilst the above invention has been described with reference to a pipe, other structures such as conduits, hoses, trunking, ventilation ducting, reactor vessels, treatment chambers and furnaces may benefit from the manufacturing method and structure described herein.

It will also be appreciated that the above-mentioned invention may be further modified in a number of ways. For example, if one wishes to increase the pressure capabilities of the structure one can apply an adhesive layer 68 between the various layers and thereby increase their resistance to strain. Alternatively, should one wish to enhance the bending capabilities one may add a low friction or deformable layer 70 (a portion of which is shown in figure 1) between the strips thereby to assist the layers to slide relative to each other during bending. Suitable low friction materials include nylon, PTFE, etc. Rubber or any other elastomeric material will allow more bending due to the elastic deformation that it can accommodate. It will still further be appreciated that the final component may comprise a multiplicity of layers of casing 28, 30 and that the present invention is not limited to the double layer arrangement shown in the figures. Additional layers are shown schematically by dotted line 72 in figures 1 and 5. Additionally, it will be appreciated that the final structure may comprise a tapered structure rather than the straight sided structure shown in the figures.

Still further, it will be appreciated that the concept of providing an inner channel into which inserts such as 34 may be inserted may be applied to other forms of tubular member.

## Claims

1. A tubular member comprising:
a casing (10) having one or more strips (12) of self overlapping helically wound material having a first edge (14) and a second edge (16), wherein
said strip has a substantially corrugated cross-sectional profile with radially adjacent curves sharing the same origin of bend radius O and includes a longitudinally extending step portion (18) between said first edge (14) and
said second edge (16) at which the strip is displaced out of the profile of the corrugation thereby to form a depression (22) and in which adjacent first leading edge (14) and second trailing edge (16) lie within said depression (22) formed by said step portion (18).

2. A tubular member as claimed in claim 1 wherein said step (18) is on a side of a corrugation.

3. A tubular member as claimed in claim 1 wherein said step (18) is at a base of a corrugation.

4. A tubular member as claimed in claim 1 wherein the member includes a flat portion (42) between corrugations and said step (18) is on said flat portion (42).

5. A tubular member as claimed in any one of claims 1 to 4 wherein the leading and trailing edges (14, 16) terminate short of said step (18), thereby to form a gap therebetween.

6. A tubular member as claimed in any one of claims 1 to 5 and including an insert (34) within the inner portions of the corrugations.

7. A tubular member as claimed in claim 6 wherein said insert comprises a gas vent (36).

8. A tubular member as claimed in any one of claims 1 to 7 wherein said corrugations have a height H and a width W and in which each corrugation has a height to width ratio of between 4:1 and 1:1.

9. A tubular member as claimed in any one of claims 1 to 8 wherein said strip (12) has a thickness T and in which the corrugations have a bend radii of greater than three times the thickness T.

10. A tubular member as claimed in any one of claims 1 to 9 and including an adhesive between said strips.

11. A tubular member as claimed in any one of claims 1 to 10 and including a low friction material (70) between said strips.

12. A tubular member as claimed in any one of claims 1 to 11 and further including a perforated strip (68) at the apex of the corrugations.

13. A tubular member as claimed in any one of the previous claims in which the corrugations comprise sinusoidally extending corrugations.

14. A method of manufacturing a tubular member comprising:
forming a flat strip (12) having a first leading edge (14) and a second trailing edge (16) and a corrugated cross-sectional profile with adjacent curves of said corrugated profile having different radii of curvature R¹, R² and sharing the same origin of bend radius O and a longitudinally extending step portion (18) between said first edge (14) and said second edge (16) at which the strip (12) is displaced out of the profile of the corrugation;
winding said strip in a self overlapping manner to form a tubular structure by overlaying the first edge (14) of said strip over the second edge (16) of a previously deposited portion of said strip (12) such that the first edge (14) is deposited into a depression (22) formed by said step (18) and the corrugation of greater radius of curvature is laid over a corresponding radially inner corrugation of lesser radius of curvature; and
continuing to wind further convolutions in self overlapping manner until said tubular member is completed.

15. A method as claimed in claim 14 including the step of winding said strip onto an inner cylindrical member (32).

16. A method as claimed in claim 15 including the step of positioning an insert (34, 40, 68) into a region formed between said corrugated tubular member and said inner cylindrical member (32).

17. A method as claimed in claim 16 including the step of inserting said insert (34) in the form of a gas vent comprising a gas permeable material having one or more longitudinally extending passageways (36a, 36b, 36c) extending therealong.

18. A method as claimed in claim 16 including the step of inserting said insert in the form of an instrumentation device (40).

19. A method as claimed in any one of claims 14 to 18 including applying an adhesive between said strips.

20. A method as claimed in any one of claims 14 to 19 including applying a low friction material (72) between said strips.

21. A method as claimed in any one of claims 14 to 20 and including applying a deformable material (72) between said strips.

22. A method as claimed in claim 21 including the step of melting an inner cylindrical member such as to allow it to flow into any void space within the corrugation.

23. A method as claimed in any one of claims 14 to 22 including the step of forming the corrugations as sinusoidally extending corrugations.

## Patentansprüche

1. Ein röhrenförmiges Element, aufweisend:
eine Hülle (10) mit einem oder mehreren Streifen (12) selbstüberlappendes spiralförmiggewundenes Material mit einer ersten Kante (14) und einer zweiten Kante (16),
wobei der Streifen ein im Wesentlichen gewelltes Querschnittsprofil mit radialbenachbarten Bögen aufweist, die den gleichen Biegeradiusursprung O teilen, und einen sich in Längsrichtung ersteckenden Stufenabschnitt (18) zwischen der ersten Kante (14) und der zweiten Kante (16) umfasst,
bei dem der Streifen zu dem Profil der Wellung versetzt ist, um **dadurch** eine Vertiefung (22) auszubilden, und
in dem benachbarte erste Vorderkante (14) und zweite Hinterkante (16) in der durch den Stufenabschnitt (18) ausgebildeten Vertiefung (22) liegen.

2. Ein röhrenförmiges Element nach Anspruch 1, wobei sich die Stufe (18) an einer Flanke einer Wellung befindet.

3. Ein röhrenförmiges Element nach Anspruch 1, wobei die Stufe (18) sich an einer Basis einer Wellung befindet.

4. Ein röhrenförmiges Element nach Anspruch 1, wobei das Element einen flachen Abschnitt (42) zwischen Wellungen umfasst und sich die Stufe (18) auf dem flachen Abschnitt befindet.

5. Ein röhrenförmiges Element nach einen der Ansprüche 1 bis 4, wobei die Vorder- und Hinterkanten (14, 16) kurz vor der Stufe (18) enden, um **dadurch** einen Spalt dazwischen auszubilden.

6. Ein röhrenförmiges Element nach einem der Ansprüche 1 bis 5, weiterhin einen Einsatz (34) innerhalb der inneren Abschnitte der Wellungen umfassend.

7. Ein röhrenförmiges Element nach Anspruch 6, wobei der Einsatz einen Gasabzug (36) aufweist.

8. Ein röhrenförmiges Element nach einem der Ansprüche 1 bis 7, wobei die Wellungen eine Höhe H und eine Breite W aufweisen, und in dem jede Wellung ein Höhen-Breiten-Verhältnis zwischen 4:1 und 1:1 aufweist.

9. Ein röhrenförmiges Element nach einem der Ansprüche 1 bis 8, wobei der Streifen (12) eine Dicke T aufweist, und in dem die Wellungen einen Biegeradius aufweisen, der größer als das Dreifache der Dicke T ist.

10. Ein röhrenförmiges Element nach einem der Ansprüche 1 bis 9, weiterhin einen Kleber zwischen den Streifen umfassend.

11. Ein röhrenförmiges Element nach einem der Ansprüche 1 bis 10, weiterhin ein Material geringer Reibung (70) zwischen den Streifen umfassend.

12. Ein röhrenförmiges Element nach einem der Ansprüche 1 bis 11, weiterhin einen perforierten Streifen (68) am Scheitelpunkt der Wellungen umfassend.

13. Ein röhrenförmiges Element nach einem der vorangegangenen Ansprüche, in dem die Wellungen sinusförmig-erstreckende Wellungen aufweisen.

14. Ein Verfahren zum Herstellen eines röhrenförmigen Elements, aufweisend:
Ausbilden eines flachen Streifens (12) mit einer ersten Vorderkante (14) und einer zweiten Hinterkante (16) und einem gewellten Querschnittsprofil, wobei benachbarte Bögen des gewellten Profils unterschiedliche Biegeradien R¹, R² aufweisen und den gleichen Biegeradiusursprung O teilen, und einem sich in Längsrichtung erstreckenden Stufenabschnitt (18) zwischen der ersten Kante (14) und der zweiten Kante (16), bei dem der Streifen (12) zu dem Profil der Wellung versetzt ist;
Winden des Streifens in selbstüberlappender Weise, um eine röhrenförmige Struktur auszubilden, durch Überlagern der ersten Kante (14) des Streifens über die zweite Kante (16) eines zuvor abgelegten Abschnitts des Streifens (12), so dass die erste Kante (14) in eine durch die Stufe (18) ausgebildete Vertiefung (22) abgelegt wird und die Wellung mit größerem Biegeradius über eine entsprechende radial-innere Wellung mit kleinerem Biegeradius gelegt wird; und
Fortsetzen, weitere Windungen in selbstüberlappender Weise zu winden, bis das röhrenförmige Element fertig gestellt ist.

15. Ein Verfahren nach Anspruch 14, umfassend den Schritt: Winden des Streifens auf ein inneres zylindrisches Element (32).

16. Ein Verfahren nach Anspruch 15, umfassend den Schritt: Anordnen eines Einsatzes (34, 40, 68) in einen zwischen dem gewellten röhrenförmigen Element und dem inneren zylindrischen Element (32) ausgebildeten Bereich.

17. Ein Verfahren nach Anspruch 16, umfassend den Schritt: Einfügen des Einsatzes (34) in Form eines Gasabzugs, der ein gasdurchlässiges Material aufweist, das einen oder mehrere sich in Längsrichtung erstreckende Durchgänge (36a, 36b, 36c) aufweist, die sich entlang diesem erstrecken.

18. Ein Verfahren nach Anspruch 16, den Schritt umfassend: Einfügen des Einsatzes in Form einer Instrumentationsvorrichtung (40).

19. Ein Verfahren nach einem der Ansprüche 14 bis 18, umfassend: Aufbringen eines Klebstoffs zwischen den Streifen

20. Ein Verfahren nach einem der Ansprüche 14 bis 19, umfassend: Aufbringen eines Materials geringer Reibung (72) zwischen den Streifen.

21. Ein Verfahren nach einem der Ansprüche 14 bis 20, weiterhin umfassend: Aufbringen eines verformbaren Materials (72) zwischen den Streifen.

22. Ein Verfahren nach Anspruch 21, den Schritt umfassend: Schmelzen des inneren zylindrischen Elements, um es so diesem zu erlauben, in Hohlräume innerhalb der Wellung zu fließen.

23. Ein Verfahren nach einem der Ansprüche 14 bis 22, den Schritt umfassend: Ausbilden der Wellungen als sinusförmig-erstreckende Wellungen.

## Revendications

1. Elément tubulaire comportant :
une enveloppe (10) ayant une ou plusieurs bandes (12) de matière enroulée de manière hélicoïdale en se chevauchant elle-même ayant un premier bord (14) et un deuxième bord (16), ladite bande ayant un profil en coupe essentiellement ondulé avec des courbes radialement adjacentes partageant la même origine de rayon de courbure 0 et comprenant une partie de palier s'étendant longitudinalement (18) entre ledit premier bord (14) et ledit deuxième bord (16) au niveau de laquelle la bande est déplacée hors du profil de l'ondulation afin de former ainsi une dépression (22) et
dans laquelle un premier bord avant (14) et un deuxième bord arrière (16) adjacents s'étendent à l'intérieur de ladite dépression (22) formée par ladite partie de palier (18).

2. Elément tubulaire selon la revendication 1 dans lequel ledit palier (18) est sur un côté d'une ondulation.

3. Elément tubulaire selon la revendication 1 dans lequel ledit palier (18) est au niveau d'une base d'une ondulation.

4. Elément tubulaire selon la revendication 1 dans lequel l'élément comprend une partie plate (42) entre des ondulations et ledit palier (18) est sur ladite partie plate (42).

5. Elément tubulaire selon l'une quelconque des revendications 1 à 4 dans lequel les bords avant et arrière (14, 16) se terminent près dudit palier (18), afin de former ainsi un espace entre eux.

6. Elément tubulaire selon l'une quelconque des revendications 1 à 5 et comprenant un insert (34) dans les parties intérieures des ondulations.

7. Elément tubulaire selon la revendication 6 dans lequel ledit insert comporte une mise à l'air libre de gaz (36).

8. Elément tubulaire selon l'une quelconque des revendications 1 à 7 dans lequel lesdites ondulations ont une hauteur H et une largeur W et chaque ondulation a un rapport hauteur sur largeur entre 4 : 1 et 1 : 1.

9. Elément tubulaire selon l'une quelconque des revendications 1 à 8 dans lequel ladite bande (12) a une épaisseur T et les ondulations ont des rayons de courbure supérieurs à trois fois l'épaisseur T.

10. Elément tubulaire selon l'une quelconque des revendications 1 à 9 et comprenant un adhésif entre lesdites bandes.

11. Elément tubulaire selon l'une quelconque des revendications 1 à 10 et comprenant une matière à faible coefficient de friction (70) entre lesdites bandes.

12. Elément tubulaire selon l'une quelconque des revendications 1 à 11 et comprenant en outre une bande perforée (68) au niveau du sommet des ondulations.

13. Elément tubulaire selon l'une quelconque des revendications précédentes dans lequel les ondulations comportent des ondulations s'étendant de manière sinusoïdale.

14. Procédé de fabrication d'un élément tubulaire comportant :
la formation d'une bande plate (12) ayant un premier bord avant (14) et un deuxième bord arrière (16) et un profil en coupe ondulé avec des courbes adjacentes dudit profil ondulé qui ont des rayons de courbure différents R¹, R² et
partageant la même origine de rayon de courbure 0 et une partie de palier s'étendant longitudinalement (18) entre ledit premier bord (14) et ledit deuxième bord (16) au niveau de laquelle la bande (12) est déplacée hors du profil de l'ondulation ;
l'enroulement de ladite bande d'une manière se chevauchant elle-même afin de former une structure tubulaire en superposant le premier bord (14) de ladite bande sur le deuxième bord (16) d'une partie précédemment déposée de ladite bande (12) de telle sorte que le premier bord (14) est déposé dans une dépression (22) formée par ledit palier (18) et l'ondulation d'un plus grand rayon de courbure est disposée au-dessus d'une ondulation radialement intérieure correspondante de rayon de courbure plus faible ; et
la poursuite de l'enroulement d'autres convolutions d'une manière se chevauchant elle-même jusqu'à ce que ledit élément tubulaire soit terminé.

15. Procédé selon la revendication 14 comprenant l'étape d'enroulement de ladite bande sur un élément cylindrique intérieur (32).

16. Procédé selon la revendication 15 comprenant l'étape de positionnement d'un insert (34, 40, 68) dans une zone formée entre ledit élément tubulaire ondulé et ledit élément cylindrique intérieur (32).

17. Procédé selon la revendication 16 comprenant l'étape d'insertion dudit insert (34) sous la forme d'une mise à l'air libre de gaz comportant une matière perméable au gaz ayant un ou plusieurs passages s'étendant longitudinalement (36a, 36b, 36c) qui s'étendent le long de celle-ci.

18. Procédé selon la revendication 16 comprenant l'étape d'insertion dudit insert sous la forme d'un dispositif d'instrumentation (40).

19. Procédé selon l'une quelconque des revendications 14 à 18 comprenant l'application d'un adhésif entre lesdites bandes.

20. Procédé selon l'une quelconque des revendications 14 à 19 comprenant l'application d'une matière à faible coefficient de friction (72) entre lesdites bandes.

21. Procédé selon l'une quelconque des revendications 14 à 20 et comprenant l'application d'une matière déformable (72) entre lesdites bandes.

22. Procédé selon la revendication 21 comprenant l'étape de fusion d'un élément cylindrique intérieur de façon à lui permettre de s'écouler dans tout espace vide à l'intérieur de l'ondulation.

23. Procédé selon l'une quelconque des revendications 14 à 22 comprenant l'étape de formation des ondulations sous la forme d'ondulations s'étendant de manière sinusoïdale.
